# FASCICULE DE BREVET EUROPEEN

(11) **EP 4 289 667 B1**
(45) Date de publication et mention de la délivrance du brevet: **09.10.2024**
(21) Numéro de dépôt: 23168975.3
(22) Date de dépôt: 20.04.2023
(51) Int. Cl.: B60Q 1/00, B60Q 1/28, F21S 43/20, B60Q 1/26, B60R 19/50

(54) **ENSEMBLE D'ÉCLAIRAGE DIURNE POUR VÉHICULE AUTOMOBILE ET VÉHICULE AUTOMOBILE ASSOCIÉ**
TAGESBELEUCHTUNGSANORDNUNG FÜR EIN KRAFTFAHRZEUG UND KRAFTFAHRZEUG
DAYTIME LIGHTING ASSEMBLY FOR A MOTOR VEHICLE AND ASSOCIATED MOTOR VEHICLE

(30) Priorité: 07.06.2022 FR 2205426
(43) Date de publication de la demande: 13.12.2023
(73) Titulaire: Stellantis Auto SAS, 78300 Poissy (FR)
(72) Inventeur: PERON, RODOLPHE, 95220 HERBLAY SUR SEINE (FR); BOUDAN, JULIEN, 91210 DRAVEIL (FR); ROYER, GUILLAUME, 91680 BRUYERES LE CHATEL (FR)

(56) Documents cités:
- CN-U- 209 013 112
- CN-U- 210 554 461
- CN-U- 213 831 504
- CN-U- 214 001 575
- CN-U- 215 904 402
- FR-A1- 2 970 219
- FR-A1- 3 083 514
- FR-A1- 3 116 885
- JP-A- 2002 144 990
- JP-A- 2004 322 910

## Description

### Domaine technique de l'invention

L'invention concerne le domaine des systèmes d'éclairage et de signalisation des véhicules automobiles. L'invention porte en particulier sur un ensemble d'éclairage diurne pour véhicule automobile. L'invention concerne également un véhicule automobile équipé d'un tel ensemble d'éclairage. L'invention s'applique, notamment, aux voitures.

### État de la technique antérieure

Les documents FR 3 116 885 A1 et CN 214904402 U divulguent respectivement l'assemblage d'un feu diurne et d'un feu anti-brouillard à un pare-chocs.

On sait que les réglementations imposent aux véhicules automobiles d'être pourvus à l'avant de feux diurnes, couramment désignés sous l'acronyme anglais DRL (*Daytime Running Lights*), qui s'allument automatiquement lorsque le véhicule se déplace vers l'avant afin d'accroître sa visibilité dans des conditions de lumière du jour. On sait aussi que la qualité perçue d'un véhicule automobile dépend largement de la qualité de ses assemblages, et notamment de la manière dont certaines pièces de son habitacle ou de sa carrosserie affleurent avec d'autres. Or, en ce qui concerne les feux diurnes, ceux-ci sont généralement implantés dans les pare-chocs des véhicules et, le plus souvent, ils sont fixés au renfort de pare-chocs, en étant généralement immobilisés dans au moins deux directions au moyen de butées formées sur la paroi du renfort de pare-chocs. Or, ce choix de fixer les feux diurnes sur le renfort de pare-chocs se révèle délétère du point de vue de la capacité de faire affleurer la glace des feux diurnes et la peau du pare-chocs, ce qui a pour conséquence de nuire à la qualité perçue des éclairages diurnes des véhicules.

### Résumé de l'invention

L'invention vise à pallier cet inconvénient. L'invention vise en particulier à fournir une solution pour fixer un feu diurne à un pare-chocs de véhicule qui maximise la capacité de pouvoir faire affleurer la glace du feu et la peau du pare-chocs. Par ce biais, l'invention a pour dessein d'améliorer la qualité perçue des véhicules automobiles équipés de feux diurnes.

Ces buts sont atteints, selon un premier objet de l'invention, au moyen d'un ensemble d'éclairage diurne pour véhicule automobile, ledit ensemble comprenant un module lumineux comportant une source de rayons lumineux implantée dans un boitier qui est fermé par une glace et au moins une partie d'un pare-chocs comportant un renfort interne surmonté d'une peau, ledit renfort étant muni d'au moins un plot de fixation coopérant avec une patte de fixation du boitier et ladite peau présentant une ouverture dans laquelle s'insère le module lumineux, la glace étant en appui de chaque côté au moins contre une surface d'appui formée par une pliure de la peau au bord de l'ouverture qui s'étend vers l'intérieur de l'ouverture et un ergot faisant saillie sur la glace s'insérant dans une fente de la pliure.

Selon une variante, l'ergot et la fente peuvent s'étendre horizontalement.

Selon une autre variante, la fente peut être formée entre deux protubérances bombées de la pliure.

Selon une autre variante, la pliure peut s'étendre sur seulement une portion du pourtour de l'ouverture.

Selon une autre variante, l'ergot peut présenter au moins une surface chanfreinée pour coopérer avec un profil en biseau de la fente.

De plus, l'invention a également pour objet un véhicule automobile équipé d'un ensemble d'éclairage tel que décrit ci-dessus.

### Brève description des figures

D'autres caractéristiques et avantages de l'invention apparaîtront à l'examen de la description détaillée ci-après, et des dessins annexés, dans lesquels :
[Fig. 1] est une vue en perspective de l'arrière d'un ensemble d'éclairage diurne selon l'invention ;
[Fig. 2] est une vue en perspective d'une partie de l'avant d'un ensemble d'éclairage diurne selon l'invention ;
[Fig. 3] est une vue en perspective d'une peau de pare-chocs d'un ensemble d'éclairage diurne selon l'invention ;
[Fig. 4] est une vue en perspective d'une fente d'un ensemble d'éclairage diurne selon l'invention ;
[Fig. 5] est une vue en perspective d'un côté d'un module lumineux d'un ensemble d'éclairage selon l'invention ; et
[Fig. 6] est une vue en perspective d'une partie d'un ensemble d'éclairage selon l'invention.

### Description détaillée de l'invention

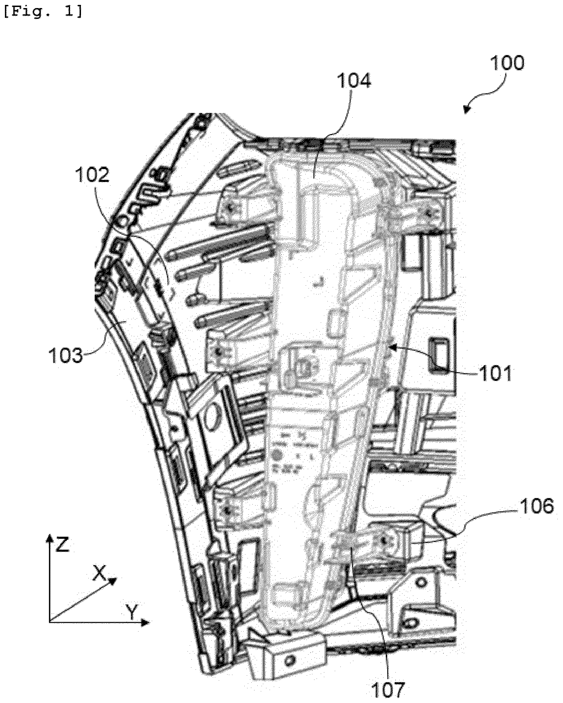

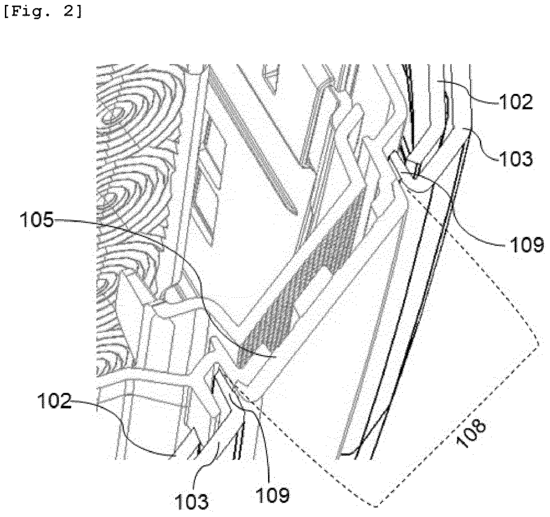

Comme on le voit sur les figures 1 et 2, un ensemble d'éclairage diurne 100 pour véhicule automobile selon l'invention comprend un module lumineux 101 et au moins une partie d'un pare-chocs formée par un renfort de pare-chocs 102 surmonté d'une peau 103. De manière traditionnelle, le module lumineux 101 comprend une source de rayons lumineux, par exemple une carte de circuit imprimé sur laquelle au moins une diode électroluminescente est connectée, qui est implantée dans un boitier 104 qui est fermé par une glace 105. Et afin d'immobiliser le module lumineux 101 dans une première direction selon le premier axe X du repère cartésien en trois dimensions qui est illustré sur la figure 1, le renfort de pare-chocs 102 est conventionnellement muni d'au moins un plot de fixation 106 qui coopère, en y étant par exemple fixé au moyen d'une vis (non représentée), avec une patte de fixation 107 du boitier 104 et la peau de pare-chocs présente une ouverture 108 dans laquelle s'insère le module lumineux 101.

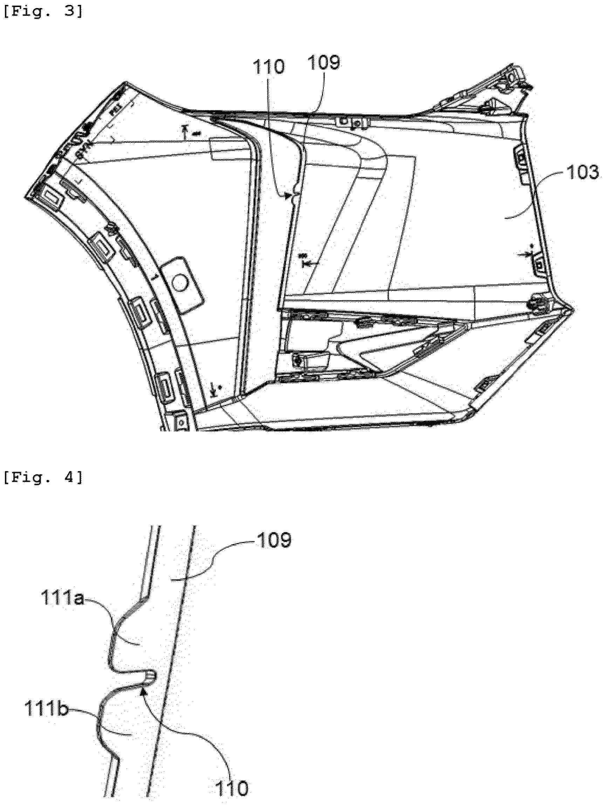

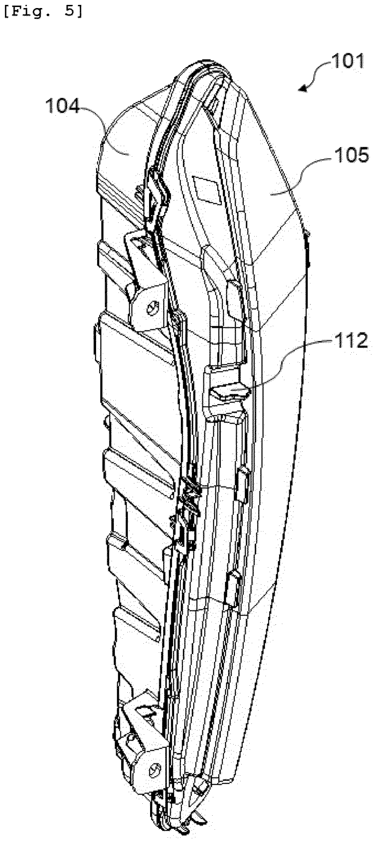

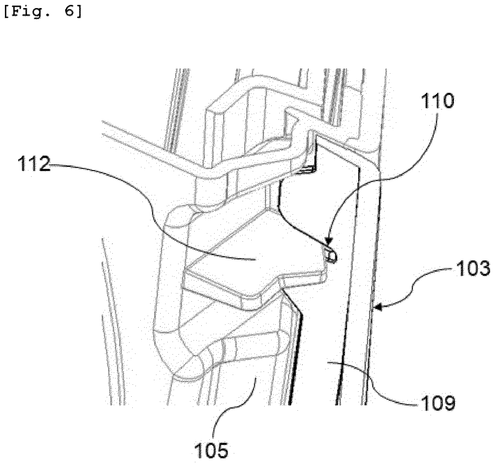

De plus, afin d'immobiliser le module lumineux 101 dans une deuxième direction selon le deuxième axe Y, la glace 105 est en appui de chaque côté au moins contre une surface d'appui formée par une pliure 109 de la peau 103 au bord de l'ouverture 108 qui s'étend vers l'intérieur de l'ouverture 108, comme cela apparait sur la figure 2. Ainsi, selon l'invention, l'immobilisation du module lumineux 101 selon le deuxième axe Y est assurée directement par la peau du pare-chocs grâce à la pliure 109 contre laquelle repose la glace 105. De fait, aucun mouvement latéral du module lumineux n'est possible et on peut ainsi faire affleurer au plus près la glace 105 du module lumineux 101 et la peau 103 du pare-chocs. De plus, comme on le voit sur les figures 3-4, la pliure 109 s'étend préférentiellement sur seulement une portion du pourtour de l'ouverture 108 et une fente 110 horizontale est formée sur la pliure 109, préférentiellement entre deux protubérances 111a, 111b bombées de la pliure 109. La fente 110 présente avantageusement un profil en biseau pour coopérer avec un ergot 112, illustré sur la figure 5, qui est formé sur la glace 105 du module lumineux 101. L'ergot 112 s'étend horizontalement et il présente au moins une surface chanfreinée afin de faciliter l'insertion de l'ergot 112 dans la fente 110, comme illustré sur la figure 6. Ainsi, grâce à cette interaction entre l'ergot 112 formé sur la glace 105 du module lumineux 101 et la fente 110 de la pliure 109, le module lumineux 101 est immobilisé dans une troisième direction selon le troisième axe Z.

Ainsi, grâce à l'ensemble d'éclairage diurne selon l'invention décrit ci-dessus, une solution est fournie pour permettre que le positionnement d'un feu diurne soit asservi plus par la peau du pare-chocs que par le renfort du pare-chocs. Et en fournissant un ensemble d'éclairage diurne qui permet un positionnement d'un feu diurne directement en regard de la peau d'un pare-chocs, en particulier avec la glace du feu en appui contre la peau du pare-chocs, l'ensemble d'éclairage diurne selon l'invention permet de faire affleurer au mieux la glace du feu diurne et la peau de pare-chocs. De ce fait, l'invention permet d'améliorer la qualité perçue des véhicules automobiles équipés de feux diurnes.

## Revendications

1. Ensemble d'éclairage diurne (100) pour véhicule automobile, ledit ensemble comprenant un module lumineux (101) comportant une source de rayons lumineux implantée dans un boitier (104) qui est fermé par une glace (105) et au moins une partie d'un pare-chocs comportant un renfort (102) surmonté d'une peau (103), ledit renfort étant muni d'au moins un plot de fixation (106) coopérant avec une patte de fixation (107) du boitier et ladite peau (103) présentant une ouverture (108) dans laquelle s'insère le module lumineux (101), **caractérisé en ce que** la glace est en appui de chaque côté au moins contre une surface d'appui formée par une pliure (109) de la peau au bord de l'ouverture qui s'étend vers l'intérieur de l'ouverture **et en ce qu'**un ergot (112) faisant saillie sur la glace (105) s'insère dans une fente (110) de la pliure.

2. Ensemble d'éclairage (100) selon la revendication 1, **caractérisé en ce que** l'ergot (112) et la fente (110) s'étendent horizontalement.

3. Ensemble d'éclairage (100) selon l'une des revendications précédentes, **caractérisé en ce que** la fente (110) est formée entre deux protubérances (111a, 111b) bombées de la pliure.

4. Ensemble d'éclairage (100) selon l'une des revendications précédentes, **caractérisé en ce que** la pliure (109) s'étend sur seulement une portion du pourtour de l'ouverture (108).

5. Ensemble d'éclairage (100) selon l'une des revendications précédentes, **caractérisé en ce que** l'ergot (112) présente au moins une surface chanfreinée pour coopérer avec un profil en biseau de la fente (110).

6. Véhicule automobile, **caractérisé en ce qu'il** est équipé d'un ensemble d'éclairage (100) selon l'une des revendications précédentes.

## Patentansprüche

1. Tagfahrbeleuchtungsbaugruppe (100) für ein Kraftfahrzeug, wobei die Baugruppe ein Lichtmodul (101) umfasst, das eine Lichtquelle umfasst, die in einem Gehäuse (104) installiert ist, das durch eine Glasscheibe (105) und zumindest einen Teil eines Stoßfängers verschlossen ist umfassend eine Verstärkung (102), auf der sich eine Haut (103) befindet, wobei die Verstärkung mit mindestens einem Befestigungszapfen (106) versehen ist, der mit einer Befestigungslasche (107) des Gehäuses zusammenwirkt, und wobei die Haut (103) eine Öffnung (108) aufweist, in die das Lichtmodul (101) eingesetzt wird, **dadurch gekennzeichnet, dass** das Glas auf jeder Seite mindestens an einer Auflagefläche anliegt, die durch eine Falte (109) der Haut am Rand der Öffnung gebildet wird, die sich zur Innenseite der Öffnung hin erstreckt **und dass** eine aus dem Glas (105) herausragende Nase (112) in einen Schlitz (110) des Falzes eingeführt wird .

2. Beleuchtungsbaugruppe (100) nach Anspruch 1, **dadurch gekennzeichnet, dass** die Nase (112) und der Schlitz (110) horizontal verlaufen .

3. Beleuchtungsanordnung (100) nach einem der vorhergehenden Ansprüche, **dadurch gekennzeichnet, dass** der Schlitz (110) zwischen zwei konvexen Vorsprüngen (111a, 111b) der Falte gebildet ist.

4. Beleuchtungsbaugruppe (100) nach einem der vorhergehenden Ansprüche, **dadurch gekennzeichnet, dass** sich die Falte (109) nur über einen Teil des Umfangs der Öffnung (108) erstreckt.

5. Beleuchtungsbaugruppe (100) nach einem der vorhergehenden Ansprüche, **dadurch gekennzeichnet, dass** die Nase (112) mindestens eine abgeschrägte Oberfläche aufweist, um mit einem abgeschrägten Profil des Schlitzes (110) zusammenzuwirken.

6. Kraftfahrzeug, **dadurch gekennzeichnet, dass** es mit einer Beleuchtungsbaugruppe (100) nach einem der vorhergehenden Ansprüche ausgestattet ist

## Claims

1. Daytime running lighting assembly (100) for a motor vehicle, said assembly comprising a light module (101) comprising a source of light rays installed in a housing (104) which is closed by a glass (105) and at least part of a bumper comprising a reinforcement (102) surmounted by a skin (103), said reinforcement being provided with at least one fixing stud (106) cooperating with a fixing lug (107) of the housing and said skin (103) having an opening (108) into which the light module (101) is inserted, **characterized in that** the glass rests on each side at least against a bearing surface formed by a fold (109) of the skin at the edge of the opening which extends towards the inside of the opening **and in that** a lug (112) projecting from the glass (105) is inserted into a slot (110) of the fold .

2. Lighting assembly (100) according to claim 1, **characterized in that** the lug (112) and the slot (110) extend horizontally .

3. Lighting assembly (100) according to one of the preceding claims, **characterized in that** the slot (110) is formed between two convex protuberances (111a, 111b) of the fold .

4. Lighting assembly (100) according to one of the preceding claims, **characterized in that** the fold (109) extends over only a portion of the perimeter of the opening (108).

5. Lighting assembly (100) according to one of the preceding claims, **characterized in that** the lug (112) has at least one chamfered surface to cooperate with a beveled profile of the slot (110).

6. Motor vehicle, **characterized in that** it is equipped with a lighting assembly (100) according to one of the preceding claims
